# NEUE EUROPÄISCHE PATENTSCHRIFT

(11) **EP 0 160 732 B2**
(45) Veröffentlichungstag und Bekanntmachung des Hinweises auf die Entscheidung über den Einspruch: **12.05.1993**
(45) Hinweis auf die Patenterteilung: 19.11.1987
(21) Anmeldenummer: 84108603.6
(22) Anmeldetag: 20.07.1984
(51) Int. Cl.: A23G 1/18, A23G 1/10, A23G 1/04

(54) **Verfahren und Vorrichtung zur Herstellung von Schokoladenmassen, Kuvertüre, Fettglasuren u.dgl.**
Process and apparatus for making chocolate masses, coatings, icings and the like
Procédé et appareil pour la fabrication de pâtes de chocolat, de couvertures, de glaçages et analogues

(30) Priorität: 04.05.1984 DE 3416533
(43) Veröffentlichungstag der Anmeldung: 13.11.1985
(73) Patentinhaber: F.B. LEHMANN Maschinenfabrik GmbH, D-73431 Aalen (DE)
(72) Erfinder: Maggioni, Ernesto, I-20090 Segrate - Milano 2 (IT)
(74) Vertreter: Kern, Wolfgang, Dipl.-Ing.

(56) Entgegenhaltungen:
- CH-B- 484 691
- DD-B- 123 570
- DE-A- 2 445 631
- DE-A- 2 614 237
- DE-A- 3 000 930
- DE-A- 3 111 352
- DE-A- 3 202 929
- FR-A- 616 817
- FR-A- 929 856
- FR-A- 1 528 109
- FR-A- 1 558 215
- FR-A- 2 303 484
- FR-A- 2 403 751
- US-A- 3 904 777
- Fincke et al. "Handbuch der Kakaoerzeugnisse", Springer Verlag, Berlin/Heidelberg/New York, 1965

## Beschreibung

Die Erfindung betrifft ein Verfahren sowie eine Vorrichtung zur Herstellung von Schokoladenmassen, Kuvertüre, Fettglasuren und dgl. gemäss dem Oberbegriff des Anspruchs 1. Bei einem bekannten Verfahren dieser Art (DE-A-3 202 929) wird die aus Kristallzucker, Kakaomasse oder Kakaopulver, vegetabilem Fett, Milchpulver und dgl. bestehende, vorzerkleinerte und vorgemischte Prozessmasse im Kreislauf mehrmals einem Zerkleinerungsvorgang unterworfen, unter Rühren durch eine Vorratszone gefördert und durch Einwirkung hoher Scherkräfte in eine dünne Schicht ausgebreitet, um in diesem Zustand mit einem gasförmigen Austauschmittel in Berührung gebracht zu werden. DerZerkleinerungsvorgang ist dabei zweistufig, indem die Prozessmasse nacheinander in Rührwerkskugelmühlen gemahlen und daraufhin in einer Waizwerksmühie gewalzt wird. Letztere wird als von ausschlaggebender Wirkung für den Verfeinerungs- und Veredelungsprozess schon deshalb für erforderlich gehalten, weil bei dieser Verfahrensweise die Prozessmasse nach dem Vermahlen, Walzen und Entgasen in einem Mischeraufgefangen wird, aus dem ständig ein Teil wieder in den Ausgangsbehälter zurückgepumpt wird, in dem sich die vorgemischte Prozessmasse befindet. Dadurch erfolgt ständig eine Vermischung des Endproduktes oder der teilweise verarbeiteten Prozessmasse mit der unverarbeiteten, vorgemischten Prozessmasse, so dass angenommen werden kann, dass selbst am Ende des Herstellungsvorgangs noch ein gewisser Anteil an nicht vollständig verarbeitetem Produkt im Endprodukt vorhanden ist.

Die mit dem bekannten Verfahren und der zu seiner Durchführung dienenden Vorrichtung angeblich erzielten Vorteile des geringeren Zeitaufwands beim Conchieren und der Energieersparnis aufgrund der Reihenschaltung beim Vermahlen der Produktmasse auf einer Mahleinrichtung und einer Walzeinrichtung werden somit zumindest durch den obengenannten Nachteil des ständigen Vermischens eines Endproduktes mit einem Ausgangsprodukt wieder aufgehoben, indem das Endprodukt möglicherweise den qualitativ gestellten Anforderungen nicht entspricht. Des weiteren ist der apparatetechnische Aufwand durch die Notwendigkeit zweier Zerkleinerungseinrichtungen beträchtlich und jedenfalls grösser als bei Anlagen, die ohne Walzeinrichtungen arbeiten.

Es ist zwar aus derDE-A-2 614 237 ein Verfahren zur kontinuierlichen Herstellung von Milchschokolademassen bekannt, bei dem chargenweise ohne Rückführung von Endprodukt gearbeitet wird, jedoch werden hierbei drei aus unterschiedlichen Materialien bestehende Teilchargen teilweise zunächst vorbehandelt, insbesondere zerkleinert, bevor sie in einen gemeinsamen Kneter gelangen, dem ein Walzwerk nachgeschaltet werden muss, um den gewünschten Produktzerkleinerungsgrad zu erreichen.

Die Aufgabe der Erfindung besteht deshalb darin, dass Verfahren der gattungsgemässen Art und die diesbezügliche Vorrichtung so weiterzubilden, dass die genannten Nachteile vermieden werden und mit einem geringeren apparatetechnischen Aufwand ein qualitativ hochwertiges Endprodukt hergestellt werden kann.

Die Lösung dieserAufgabe besteht, was den verfahrenstechnischen Teil anbelangt, darin, dass die Prozessmasse als eine Charge nach dem Vormischen in Rührwerkskugelmühlen vermahlen und durch einen Dünnschicht reaktor gefördet wird, in dem sie von einem Rotor zu einer dünnen Schicht auf der Reaktorwandung ausgebreitet wird, die unter ständiger Erneuerung mit aus dem Rotor austretenden Heißluftstrahlen beaufschlagt und entgast wird, woraufhin sie in einem Homogenisator homogenisiert und bis zur vollständigen Entleerung des Vormischers ohne Rücklauf zu letzterem gespeichert wird, und was den vorrichtungstechnischen Teil anbelangt, darin, dass die Zerkleinerungseinrichtung wenigstens eine Rührwerksmühle ist und die Ausbreit- und Entgasungseinrichtung ein säulenförmiger Dünnschichtentgasungsreaktor mit einem mit Düsenöffnungen versehenen Rotor zur gleichmässigen Verteilung und Beaufschlagung der Prozessmasse mit Heissluft, und dass sich an den Dünnschichtentgasungsreaktor ein Homogenisator zur Homogenisierung und Speicherung der Prozessmasse anschliesst, welcher mit einem Rührwerk versehen ist, sowie mit einem Ausgang für die homogenisierte Prozessmasse und/oder zur Rührwerkskugelmühle.

Durch die erfindungsgemässe Verfahrensweise wird eine Vermischung der gemahlenen und entgasten Prozessmasse mit der nur vorgemischten und sonst unbehandelten Prozessmasse vermieden. Die Verwendung eines Walzenstuhls in Verbindung mit den bekannten Rührwerkskugelmühlen als Mahlvorrichtung ist überflüssig. Es wird zwar nicht verkannt, dass zur Erzielung einer guten Feinheit mit möglichst kleinem Kornspektrum der Produktmasse ein Walzenstuhl in Verbindung mit Rührwerkskugelmühlen Vorteile bringt, die jedoch die Nachteile zumindest aufwiegen, die dadurch bedingt sind, dass ein Walzenstuhl notwendig wird, wenn ein Endprodukt ständig mit einer vorgemischten und noch nicht vermahlenen Prozessmasse wieder vermischt wird, weil dann das Kornspektrum einer solchermassen hergestellten Mischung besonders gross ist.

Des weiteren ist festzustellen, dass die groben Kornfraktionen der Prozessmasse, die etwa im Bereich zwischen 500 bis 800 µm liegen, wirksam zerkleinert werden, dieser Effekt aber auch zumindest teilweise durch mehrmaliges Hindurchpumpen der Prozessmasse durch vorhandene Rührwerkskugelmühlen erzielt werden kann.

Diese Verfahrensvariante ist auch dann mit Vorteil anwendbar, wenn der Vormischer vollständig entleert worden ist, die Prozessmasse sich also mehr oder weniger vollständig im Homogenisator befindet, von wo aus sie dann im Kreislauf wenigstens ein weiteres Mal durch die Rührwerkskugelmühle und den Dünnschichtentgasungsreaktor hindurchgefördert werden kann.

Falls das in der Prozessmasse nach einmaligem Durchgang durch die Zerkleinerungsvorrichtung vorhandene Kornspektrum den gewünschten Werten entspricht, lässt sich ein nochmaliges Vermahlen in der Rührwerkskugelmühle vermeiden und die in dem Homogenisator vorhandene Prozessmasse noch während des Abzugs der Prozessmasse aus dem Vormischer in einem Nebenstrom wenigstens ein weiteres Mal durch den Dünnschichtentgasungsreaktor hindurchfördern und zum Homogenisator zurückleiten, um dadurch den Entgasungsgrad zu steigern.

Die letztgenannte Verfahrensvariante lässt sich erst recht dann mit Erfolg einsetzen, wenn sich die gesamte Produktmasse im Homogenisator befindet, also keine Vermischung von in der Rührwerkskugelmühle vermahlenem Produkt mit bereits den Dünnschichtentgasungsreaktor durchlaufenem Produkt vor dessen Eingang stattfindet.

Dem der Zerkleinerung nachgeschalteten Dünnschichtentgasungsreaktor kommt insofern verfahrenswesentliche Bedeutung zu, als sein Rotor die Produktmasse nicht nur zu einer dünnen Schicht auf der Reaktorwandung ausbreitet, sondern städig erneuert und mit aus dem Rotor austretenden Heissluftstrahlen beaufschlagt. Dadurch wird nicht nur eine sehr starke Vergrösserung der Oberfläche der Produktmasse für den Entgasungsvorgang sichergestellt, sondern auch ein intensiver Wärme- und Stoffaustausch, da die aus dem Rotor ausströmende Heissluft, die auch durch ein Reaktionsgas ersetzt werden könnte, auf diese Weise fein verteilt in die wie ein Film ausgebreitete Produktmasse eingeblasen wird und dieser Produktmassenfilm, dadurch, dass er in dem senkrechten Reaktor von oben nach unten wandert, eine Verweilzeit aufweist, die zu einer wesentlich besseren Veredelung der Produktmasse führt als bei dem herkömmlichen Conchieren.

Die erfindungsgemässe Vorrichtung zur Durchführung des obigen Verfahrens lässt sich hinsichtlich ihres Aufbaus vorteilhaft dadurch variieren, dass zwei parallel geschaltete Rührwerkskugelmühlen Verwendung finden, die sowohl gleichzeitig als auch abwechselnd arbeiten können. Des weiteren lässt sich an den Vormischer eine Fördersschnecke zur Beschickung des Vormischers mit den Feststoffkomponenten der Prozessmasse anschliessen und eine Dosieranlage zur Zudosierung von Lezithin, und die Förderleitungen für die Prozessmasse zu den Rührwerkskugelmühlen können mit je einer Zuführpumpe versehen sein, während die Ausgangsleitungen der Rührwerkskugelmühlen in einen gemeinsamen Aufnahmebehälter münden können, an den eine Produktpumpe zur Beschickung des Dünnschichtentgasungsreaktors angeschlossen sein kann, dessen Produktmassenausgang mit einer Förderpumpe zur Förderung der Produktmasse zum Homogenisator verbunden sein kann.

Als Dünnschichtentgasungsreaktor hat sich eine Konstruktion bewährt, die eine doppelwandige, warmwasserbeheizte Säule aufweist, welche für einen maximalen Betriebsüberdruckvon 5,5 barausgelegt ist und in der sich ein Rotor mit Düsenöffnungen zur Beaufschlagung der Produktmasse mit Heissluft befindet, welche von einem Heissluftgebläse geliefert wird.

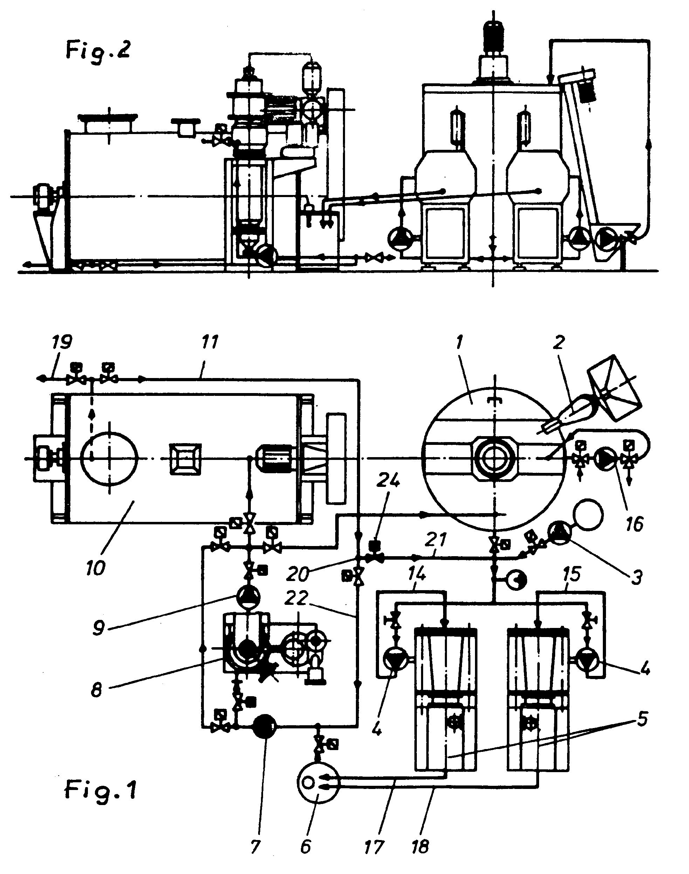

Die Erfindung wird nachfolgend anhand eines Fliessschemas der erfindungsgemässen Vorrichtung in Draufsicht (Fig. 1) und Vorderansicht (Fig. 2) beispielshalber näher erläutert.

Wie aus den Zeichnungsfiguren ersichtlich, weist die Vorrichtung einen als Vorratsbehälter dienenden Vormischer 1 auf, der zur Aufnahme der Bestandteile, wie Kakaomasse und/oder Kakaopulver, Kakaobutter, vegetabilem Fett, Milchpulver, Kristallzucker und dgl. dient, aus denen sich die Prozessmasse zusammensetzt, die eine Schokoladenmasse, Kuvertüre, Fettglasur, Überzugsmasse und dgl. bildet. Dieser Vormischer weist ein Fassungsvermögen von z.B. 5000 kg bei einem spezifischen Gewicht von 1,2 kg/dm³ auf und besitzt Rührorgane zum Vermischen der genannten Bestandteile.

Die Beschickung des Vormischers geschieht mit Hilfe einer Förderschnecke 2 mit Produkktaufgabekasten, deren Leistung bei einem spezifischen Gewicht von 1,2 kg/dm³ ca. 1200 kg/Std. beträgt. Eine an den Vormischer angeschlossene beheizte Ringleitung 16 mit eingebauter Förderpumpe dient zur Umwälzung der Produktmasse beim Mischvorgang.

Durch eine Dosieranlage 3 lässt sich in den aus dem Vormischer 1 austretenden Produktmassenstrom Lezithin eindosieren. Dieser Massenstrom wird danach mit Hilfe von in die Zufuhrleitungen 14, 15 eingebauten Zuführpumpen 4 zwei parallel geschalteten, horizontalen Rührwerkskugelmühlen zugeleitet, in denen er vermahlen wird. Diese Mühlen entsprechen bekannter Bauart und weisen eine Mahlgutabtrennung durch ein auf die Rührwelle aufgestecktes Spaltsieb mit grosser, offener Siebdurchgangsfläche auf, das durch Rotation sich selbst reinigt. Der Mahlgutabfluss erfolgt durch die Rührwelle. In den konischen, doppelwandigen Mahlbehältern sind auf die Rührwelle aufgesteckte, mit Flügeln versehene Rührscheiben angeordnet.

Nach dem Vermahlen tritt die Prozessmasse durch die Leitungen 17 und 18 in einen gemeinsamen Auffangbehälter, und wird dort mit Hilfe einer Zuführpumpe 7 in den Dünnschichtentgasungsreaktor 8 gefördert. Dieser Reaktor weist eine doppelwandige, warmwasserbeheizte Säule auf und ist auf einen Betriebsdruck von maximal 5,5 bar ausgelegt. In ihm befindet sich ein senkrechter mit Düsenöffnungen zur gleichmässigen Beaufschlagung der Produktmasse mit Heissluft von z.B. 80°C versehener Rotor. Die Heissluft wird durch ein Heissluftgebläse zugeführt.

Der Dünnschichtentgasungsreaktor breitet auf seiner zylindrischen inneren Oberfläche die eintretende Produkt masse in einer dünnen Schicht aus, die von oben nach unten abfliesst und dabei mit den Heissluftstrahlen beaufschlagtwird. Die über die Produktschichtoberfläche gleitenden Rotorarme bereiten die Oberfläche ständig neu auf, so dass eine wirksame Entgasung stattfindet.

Die in dem Reaktor behandelte Produktmasse wird mit Hilfe einer Zuführpumpe 9 dem Homogenisator 10 zugeleitet, der zur Homogenisierung der fertigen Schokoladenmasse oder sonstigen, Masse dient und dessen Fassungsvermögen mit 5000 kg bei einem spezifischen Gewicht von 1,2 kg/dm³ ebenso gross ist wie dasjenige des Vormischers 1. Der Homogenisator 10 ist ebenfalls mit einem Rührorgan versehen und besitzt eine Produktmassenaustrittsleitung 19 sowie eine Produktmassenrückführleitung 11 für einen Massennebenstrom, die bei 20 in einen zu den Rührwerkskugelmühlen zurückführenden Leitungsstrang 21 und einen zum Dünnschichtentgasungsreaktor 8 über die Zuführpumpe 7 zurückführenden Leitungsstrang 22 aufgeteilt ist.

Zu den oben beschriebenen Einrichtungen gehören auch ein hier nicht näher erläuterter elektrischer Schalt- und Überwachungsschrank 13.

Es versteht sich, dass alle erwähnten Produktmassenförderleitungen an geeigneten Stellen mit geeigneten Ventilen versehen sind, so dass insbesondere die im folgenden beschriebenen Verfahrensvarianten betrieben werden können. Die Prozessmasse wird aus dem Vormischer 1 in die Rührwerksmühlen 5 gefördert. Daraufhin findet in diesen Mühlen die Vermahlung auf ein gewünschtes Kornspektrum statt. Danach wird die vermahlene Prozessmasse durch den Dünnschichtentgasungsreaktor 8 in den Homogenisator 10 gefördert und dort gespeichert bzw. homogenisiert. Dieser Vorgang wiederholt sich so lange, bis der Vormischer leer ist und sich die gesamte Produktmasse im Homogenisator befindet.

Falls das Endprodukt weiter vermahlen und veredelt werden soll, wird die Produktmasse vom Homogenisator 10 zu den Rührwerksmühlen zurückgepumpt, um einer weiteren Vermahlung ausgesetzt zu werden, die dann ebenfalls chargenweise stattfindet, wobei das jeweils vermahlene Produkt wiederum durch den Dünnschichtentgasungsreaktor 8 in den Vormischer 1 gelangt. Ein weiterer Mahlgang würde dann zum Homogenisator führen.

Andererseits lässt sich, falls das Korngrössenspektrum des im Homogenisator 10 befindlichen Endprodukts der gewünschten Qualität entspricht, jedoch eine weitere Entgasung und Verarbeitung des Produktes im Dünnschichtentgasungsreaktor 8 erforderlich erscheint, dieses Endprodukt nach Schliessung des Ventils 24 in der Prozessmassenrückführleitung 21 nur durch die Leitung 22 mit Hilfe der Pumpe 7 wieder in den Reaktor 8 einspeisen, um von dort in den Homogenisator zurückzukehren.

## Patentansprüche

1. Verfahren zur Herstellung von Schokoladenmassen, Kuvertüre, Fettglasuren und dgl., bei dem eine Prozessmasse aus Kakaomasse und/oder Kakaopulver, Kakaobutter, vegetablem Fett, Milchpulver, Kristallzucker und dgl., vorgemischt und wenigstens einem Zerkleinerer zugeführt wird und in einer dünnen Schicht ausgebreitet und mit einem Gas in Stoff- und/oder Wärmeaustauschberührung gebracht wird, dadurch gekennzeichnet, dass die Prozessmasse als eine Charge nach dem Vormischen in Rührwerkskugelmühlen vermahlen und durch einen Dünnschicht reaktor gefördert wird, in dem sie von einem Rotor zu einer dünnen Schicht auf der Reaktorwandung ausgebreitet wird, die unter ständiger Erneuerung mit aus dem Rotor austretenden Heissluftstrahlen beaufschlagt und entgast wird, woraufhin sie in einem Homogenisator homogenisiert und bis zur vollständigen Entleerung des Vormischers ohne Rücklauf zu letzterem gespeichert wird.

2. Verfahren nach Anspruch 1, dadurch gekennzeichnet, dass während der Homogenisierung der Prozessmasse ein Teil der Masse aus dem Homogenisator abgezogen und in einem Nebenstrom wenigstens ein weiteres Mal durch den Dünnschichtentgasungsreaktor hindurchgefördert und zum Homogenisator zurückgeieitet wird.

3. Verfahren nach Anspruch 1, dadurch gekennzeichnet, dass nach dem vollständigen Abzug der Prozessmasse aus dem Vormischer und ihrer Einleitung in den Homogenisator die Prozessmasse aus dem Homogenisator abgezogen und im Kreislauf wenigstens ein weiteres Mal durch den Dünnschichtentgasungsreaktor hindurchgefördert und in den Homogenisator zurückgeleitet wird.

4. Verfahren nach Anspruch 1 oder 3, dadurch gekennzeichnet, dass nach vollständiger Entleerung des Vormischers die im Homogenisator befindliche Prozessmasse wenigstens ein weiteres Mal zerkleinert und danach durch den Dünnschichtentgasungsreaktor hindurchgefördert wird.

5. Vorrichtung zur Durchführung des Verfahrens nach einem derAnsprüche 1 bis 4, mit einem Vorratsbehälter für die Prozessmasse und wenigstens einer sich daran anschliessenden Zerkleinerungseinrichtung mit nachgeschalteter Ausbreit- und Entgasungseinrichtung für die Prozessmasse, dadurch gekennzeichnet, dass die Zerkleinerungseinrichtung wenigstens eine Rührwerkskugelmühle (5) ist und die Ausbreit-und Entgasungseinrichtung ein säulenförmiger Dünnschichtentgasungsreaktor (8) mit einem Rotor mit Düsenöffnungen zur gleichmässigen Verteilung und Beaufschlagung der Prozessmasse mit Heissluft, und dass sich an den Dünnschichtentgasungsreaktor ein Homogenisator (10) zur Homogenisierung und Speicherung der Prozessmasse anschliesst, welcher mit einem Rührwerk versehen ist, sowie mit einem Ausgang für die homogenisierte Prozessmasse.

6. Vorrichtung nach Anspruch 5, dadurch gekennzeichnet, dass zwei parallel geschaltete Rührwerkskugelmühlen (5) vorhanden sind, die sowohl gleichzeitig als auch abwechselnd betreibbar sind.

7. Vorrichtung nach Anspruch 5 oder 6, dadurch gekennzeichnet, dass das Volumen des Homogenisators (10) wenigstens so gross ist wie das Volumen des Vormischers (17.

8. Vorrichtung nach einem der Ansprüche 5 bis 7, dadurch gekennzeichnet, dass an den Vormischer (1) eine Förderschnecke (2) zur Beschickung des Vormischers mit den Feststoffkomponenten der Prozessmasse angeschlossen ist, sowie eine Dosieranlage (3) zur Zudosierung von Lezithin in den den Vormischer verlassenden Prozessmassenstrom, dass in die Förderleitungen für die Prozessmasse zu den Rührwerkskugelmühlen (5) je eine Zuführpumpe (4) eingebaut ist, und dass die Ausgangsleitungen der Rührwerkskugelmühlen in einem gemeinsamen Aufnahmebehälter (6) münden, an den eine Produktpumpe (7) zur Beschickung des Dünnschichtentgasungsreaktors (8) angeschlossen ist, dessen Produktmassenausgang mit einer Förderpumpe (9) zur Förderung der Produktmasse zum Homogenisator (10) verbunden ist.

9. Vorrichtung nach einem der Ansprüche 5 bis 8, dadurch gekennzeichnet, dass der Dünnschichtentgasungsreaktor (8) eine doppelwandige, warmwasserbeheizte Säule ist, die für einen maximalen Betriebsüberdruckvon 5,5 bar ausgelegt ist und in der sich ein mit Löchern versehener Rotor zur Ausbreitung und Beaufschlagung der Produktmasse mit Heissluft mit Hilfe eines Heissluftgebläses befindet.

## Claims

1. Process for the manufacturing of chocolate masses, chocolate covers, fatty glazes and the like according to which a process mass of cacao mass and/or cacao powder, cacao butter, vegetable fat, milk powder, crystalline sugar and the like are premixed and fed at least to one comminution apparatus and spread in a thin layer and is brought in a substance and/or heatexchange contact with a gas, characterized in that the process mass is after its premixture ground in agitating ball mills and conveyed through a thin layer reactor in which it is spread and degassed by a rotor in a thin layeroverthe reactor wall which layer is treated under continuously renewing with hot air streams leaving the rotor, whereafter it is homogenized in a homogenizator and is stored without recycling to the latter one until the complete depletion of the premixer.

2. Process according to claim 1, characterized in that during homogenization of the process mass part of the mass is withdrawn from the homogenizator and is conveyed at least a further time in a bypass through the thin layer degassing reactor and returned to the homogenizator.

3. Process according to claim 1, characterized in that after the complete withdrawal of the process mass from the premixer and its entering into the homogenizator the process mass is withdrawn from the homogenizator and recycled at least a further time through the thin layer degassing reactor and returned to the homogenizator.

4. Process according to claim 1 or 3, characterized in that after completely emptying of the premixer the process mass within the homogenizator is at least a second time comminuted and thereafter conveyed through the thin layer degassing reactor.

5. Apparatus for operating the process according to one of the claims 1 through 4, comprising a storage container for the process mass and at least one comminution device attached thereto and a spreading and degassing device following thereto for the process mass, characterized in that the comminution device is at least one agitating ball mill (5) and that the spreading and degassing device is a column like thin layer degassing reactor (8) provided with a rotor having jet openings for the uniformly dispersing and treating of the process mass with hot air and that that thin layer degassing reactor is followed by a homogenizator (10) for the homogenization and storage of the process mass, which homogenizator is provided with an agitator as well as with an exit for the homogenized process mass.

6. Apparatus according to claim 5, characterized in that there are two parallel switched agitating ball mills (5) which can be operated simultaneously as well as alternatively.

7. Apparatus according to claim 5 or 6, characterized in that the volume of the homogenizator (10) is at least so great as the volum of the premixer (1).

8. Apparatus according to one of the claims 5 through 7, characterized in that the premixer (1) is connected to a conveyor screw (2) for the supply of the premixer with solid components of the process mass as well as connected to a metering device (3) for the metering of lecithin into the process mass stream leaving the premixer, that within the conveyor tubes for the process mass leading to the agitating ball mills (5) is each positioned a supply pump (4), and that the exit tubes of the agitating ball mills are ending in a common receiving container (6) which is connected to a product pump (7) for the supply of the thin layer degassing reactor (8), the process mass exit thereof is connected to a conveyor pump (9) for the delivery of the process mass to the homogenizator (10).

9. Apparatus according to one of the claims 5 through 8, characterized in that the thin layer degassing reactor (8) is a double walled, warm water heated column which is operating under a maximum operational pressure of 5,5 bar and which includes a rotor provided with holes for the spreading and treatment of the process mass with hot air by means of a hot air vane.

## Revendications

1. Procédé de fabrication de pâtes de chocolat, de couvertures, de glaçages et analogues, suivant lequel la pâte à traiter composée de pâte et/ou de poudre de cacao, de beurre de cacao, de graisse végétale, de poudre de lait, de sucre cristallisé ou d'autres produits similaires est prémélangée, acheminée vers au moins un broyeur, étalée en une couche mince et mise en contact avec un gaz assurant un transfert de matière et/ou un échange de chaleur, caractérisée en ce que la pâte à traiter prémélangée est moulue en tant que charge dans des broyeurs à boules et à agitateur et ensuite refoulée à travers un réacteur de dégazage en couches minces, dans lequel elle est étalée au moyen d'un rotor sur la paroi du réacteur en une couche mince constamment renouvelée et ventilée par des jets d'air chaud sortant du rotor, après quoi elle est homogénéisée dans un homogénéisateur et y reste stockée jusqu'à ce que le prémélangeur soit complètement vide, sans retourner vers celui-ci.

2. Procédé conforme à la revendication 1, caractérisé en ce que pendant l'homogénéisation de la pâte, une partie de celle-ci est prélevée dans l'homogénéisateur, traverse une nouvelle fois le réacteur de dégazage en couches minces en parcourant un circuit annexe, et retourne finalement vers l'homogénéisateur.

3. Procédé conforme à la revendication 1, caractérisé en ce que, quand le prémélangeur est complètement vide et que toute la pâte se trouve dans l'homogénéisateur, elle y est prélevée et traverse au moins une fois de plus le réacteur de dégazage en couches minces, en circuit fermé, pour retourner finalement vers l'homogénéisateur.

4. Procédé conforme à la revendication 1 ou 3, caractérisé en ce que, quand le prémélangeur est complètement vide, la pâte se trouvant dans l'homogénéisateur est rebroyée au moins une fois de plus et retraverse ensuite le réacteur de dégazage en couches minces.

5. Appareil de mise en oeuvre du procédé conforme à l'une quelconque des revendications 1 à 4, comprenant un réservoir de pâte à traiter et au moins un équipement de concassage relié à ce réservoir, et en aval un équipement d'étalement et de dégazage de la pâte, caractérisé en ce que l'équipement de concassage est constitué d'au moins un broyeur à boules et à agitateur (5), en ce que l'équipement d'étalement et de dégazage se compose d'un réacteur de dégazage en couches minces en forme de colonne (8) contenant un rotor pourvu d'orifices calibrés assurant une distribution et une ventilation uniformes de la pâte à l'aide d'air chaud, et en ce que le réacteur de dégazage en couches minces est relié à un homogénéisateur (10) pour l'homogénéisation et le stockage de la pâte, lequel est équipé d'un agi- tateuretd'une sortie pour la pâte homogénéisée.

6. Appareil conforme à la revendication 5, caractérisé en ce que deux broyeurs à boules et à agitateur (5) sont montés en parallèle et peuvent fonctionner soit en même temps, soit en alternance.

7. Appareil conforme aux revendications 5 ou 6, caractérisé en ce que la capacité de l'homogénéisateur (10) est au moins égale à celle du prémélangeur(1).

8. Appareil conforme à l'une quelconque des revendications 5 à 7, caractérisé en ce qu'un alimenta- teur à vis sans fin (2) est raccordé au prémélangeur (1) et lui fournit les composants solides de la pâte à traiter, en ce qu'un doseur (3) injecte des doses de lécithine dans la pâte quittant le prémélangeur, en ce qu'une pompe de refoulement (4) est montée dans chacune des canalisations vers les broyeurs à boules et à agitateur (5), et en ce que les canalisations de sortie des broyeurs aboutissent à un réservoir collecteur commun (6) auquel est associée une pompe (7) d'alimentation du réacteur de dégazage en couches minces (8), dont la sortie est reliée à une pompe (9) qui refoule la pâte produite vers l'homogénéisateur (10).

9. Appareil conforme à l'une quelconque des revendications 5 à 8, caractérisé en ce que le réacteur de dégazage en couches minces (8) est constitué d'une colonne à paroi double chauffée à l'eau, prévue pour une pression de service maximale de 5,5 bars, et contenant un rotor pourvu d'orifices de distribution et de ventilation de la pâte à l'aide d'air chaud fourni par une soufflante.
